# EUROPÄISCHE PATENTSCHRIFT

(11) **EP 0 804 352 B1**
(45) Veröffentlichungstag und Bekanntmachung des Hinweises auf die Patenterteilung: **02.12.1998**
(21) Anmeldenummer: 96901294.7
(22) Anmeldetag: 18.01.1996
(51) Int. Cl.: B60R 21/09, B60T 7/06, B60K 23/00

(54) **SICHERHEITSANORDNUNG FÜR EIN KRAFTFAHRZEUG**
MOTOR VEHICLE SAFETY ARRANGEMENT
SYSTEME DE SECURITE POUR AUTOMOBILE

(30) Priorität: 23.01.1995 DE 19501859
(43) Veröffentlichungstag der Anmeldung: 05.11.1997
(73) Patentinhaber: Volkswagen Aktiengesellschaft, 38436 Wolfsburg (DE)
(72) Erfinder: SINNHUBER, Ruprecht, D-38518 Gifhorn (DE); VÖGE, Frank, D-49090 Osnabrück (DE); THUM, Holger, Michael, D-38104 Braunschweig (DE); KNOTHE, Ulrich, D-38104 Braunschweig (DE)
(86) Internationale Anmeldenummer: EP9600188
(87) Internationale Veröffentlichungsnummer: WO9622903

(56) Entgegenhaltungen:
- EP-A- 0 378 314
- DE-A- 1 951 585
- DE-A- 2 151 599
- DE-A- 3 904 616
- DE-A- 4 305 290
- DE-A- 4 335 511
- DE-A- 4 409 235
- DE-A- 4 409 324
- DE-A- 4 415 642

## Beschreibung

Die Erfindung betrifft eine Sicherheitsanordnung für ein Kraftfahrzeug gemäß dem Oberbegriff des Patentanspruchs 1 bzw. 8.

Eine gattungsgemäße Sicherheitsanordnung ist bekannt geworden aus der DE-A-44 15 642. Zur Minimierung von Fußverletzungen bei Unfällen mit Frontalaufprall wird in dieser Schrift vorgeschlagen, eine einen Motorraum von einer Fahrerzelle trennende Stirnwand mit einem Sollknickbereich zu versehen. Dieser ist so angelegt, daß bei einer durch einen Frontalaufprall bewirkten Beaufschlagung der Stirnwand die auf einem Lagerbock angeordneten Pedalhebel vom Fahrer fortbewegt werden. In der DE-21 51 599-C2 wird eine Sicherheitsanordnung beschrieben, bei der innerhalb einer Armaturentafel ein Deformationsglied angeordnet ist. Dieses erstreckt sich in etwa geradlinig über die gesamte Fahrzeugbreite und ist als Knierückhalteelement ausgebildet. Das Deformationselement wird gleichzeitig genutzt zur Abstützung der Lenkung und/oder Lagerung der Pedale. Wie insbesondere die parallel dazu angemeldete US-A-3, 856, 103 näher veranschaulicht, ist bei einem Frontalaufprall durch die damit einhergehende Spritzwandintrusion mit einer Beaufschlagung der Pedalanlenkung in der Weise zu rechnen, daß der Fußhebel in Richtung des Fahrzeuginsassen bewegt wird und somit insbesondere die unteren Extremitäten erheblich gefährdet. Es sind in jüngerer Zeit Konstruktionen bekannt geworden, die entweder eine Verschwenkung des Fußhebels in Richtung Spritzwand (siehe DE-A-39 04 616) oder ein Herausziehen desselben aus dem Fußraum heraus vorsehen (siehe hierzu beispielsweise die DE-A-43 05 290-A1). Das den beiden letztgenannten Schriften gemeinsame Wirkprinzip besteht darin, daß die bei einem Frontalaufprall auftretende Intrusion der Spritzwand zu einer Relativverschiebung gegenüber einem quer verlaufenden und im wesentlichen biegesteifen Montageträger führt. Aus dieser Relativbewegung wird durch eine bestimmte Anordnung von dem Fußhebel zugeordneten Funktionsteilen eine Schwenk- oder Schiebebewegung gewonnen.

Der Erfindung liegt die Aufgabe zugrunde, für Kraftfahrzeuge eine Sicherheitsanordnung samt Pedalwerk bereitzustellen, durch die die Verletzungsgefahr für Fahrzeuginsassen noch weiter verringert werden kann.

Diese Aufgabe wird gelöst gemäß den kennzeichnenden Merkmalen der Patentansprüche 1 und 8. Die Unteransprüche enthalten besonders zweckmäßige Weiterbildungen der Erfindung.

Erfindungsgemäß ist also auch wie bei der DE-A-39 04 616-A1 und der DE-A-43 05 290 das quer zur Fahrtrichtung verlaufende Trägerelement biegesteif ausgeführt und darüber hinaus von der Spritzwand in der Weise entkoppelt, daß es seine räumliche Lage auch bei einem Frontal- oder Offsetaufprall trotz Spritzwandintrusion beibehält. Anders als bei den genannten Entgegenhaltungen wird aber der Fußhebel nicht zwischen biegesteifem Träger und Spritzwand angeordnet, sondern auf dem biegesteifem Träger selbst. Damit behält der in der Regel von der Spritzwand beabstandete Fußhebel seine für den Fahrzeuginsassen ungefährliche Stellung zumindest bei. Mit der Erfindungsvariante gemäß Patentanspruch 8 kann aber auch alternativ oder zusätzlich eine Schwenkbewegung in der Weise erzeugt werden, daß aus der Spritzwand- und/oder Aggregateverlagerung Betätigungskräfte zur Verschwenkung oder Verschiebung des Fußhebels gewonnen werden, und zwar durch Knicken oder Biegen eines Betätigungsgestänges, das wenigstens einen der Fußhebel mit einem Hauptbremszylinder verbindet.

Die Anlenkung des Fußhebels direkt an einem aufbaufesten Trägerelement ist grundsätzlich bekannt aus der DE-30 40 722-C2. Ausgehend von einem Bodenblech ist dort allerdings das Trägerelement im wesentlichen vertikalstehend ausgeführt und reicht im übrigen so nah an eine Außenwand heran, daß bei einer unfallbedingten Beaufschlagung dieser Außenwand durch einem aufprallenden Gegenstand mit einer Einwärtsbewegung des gesamten Trägers und damit auch des darin angelenkten Fußhebels zu rechnen ist.

Besonders vorteilhaft ist eine Erstreckung des biegesteifen Trägerelementes zwischen zwei Karosseriepfosten, also beispielsweise zwischen den beiden sogenannten A-Säulen. Durch diese Maßnahme wird auch die Stabilität der Karosserie bei Seitenaufprallunfällen deutlich verbessert. Eine weitere Erhöhung der Stabilität kann durch eine massive Anbindung des Trägerelementes an einen in der Fahrzeugmitte vertaufenden Mitteltunnel erfolgen.

Darüber hinaus ist auch das erfindungsgemäße Trägerelement als unterer Lagerpunkt für eine Lenksäule nutzbar. Ein erhöhtes Maß an Sicherheit wird zudem bereitgestellt, wenn die Lenksäule mit einem teleskopierenden Kraftbegrenzer ausgerüstet wird. Die vom Insassen unfallbedingt auf das Lenkrad ausgeübten Kräfte werden so auf ein erträgliches Maß beschränkt.

Ein weiterer Vorteil des erfindungsgemäßen Konzeptes ist darin zu sehen, daß beispielsweise durch die Befestigung von Bremskraftverstärker und Hauptbremszylinder an dem Trägerelement die Akustik im Fahrgastraum verbessert werden kann, weil eine direkte Anregung aus dem Aggregateraum heraus nicht mehr stattfindet. In einer bevorzugten Ausführungsform ist vorgesehen, daß sämtliche zur Bremsanlage gehörenden Betätigungselemente wie Fußhebel Druckstange, Bremskraftverstärker und Hauptbremszylinder sowie die übrige Pedalerie für die Betätigung von Leistungsstellgliedem und Kupplungsorganen samt Lenkung zusammen mit dem Trägerelement zu einem Vormontagesatz zusammengefaßt sind. Ergänzend können außerdem am Trägerelement noch Halteglieder für einen Airbagträger oder ein Kniepolster vorgesehen werden. Letzteres kann auch durch eine zumindest mittelbar am Trägerelement abstützbare Handschuhkastenklappe gebildet sein. Damit verringert sich insgesamt auch der Montageaufwand für ein mit einem erfindungsgemäßen Pedalwerk ausgerüstetes Kraftfahrzeug. Es ist außerdem noch zu erwähnen, daß das Tragerelement aufgrund der Entkopplung von der Spritzwand keinen hohen Belastungen ausgesetzt ist und daher für seine Festigkeitsauslegung nur die auf das Pedalwerk ausgeübten Betätigungskräfte und das Eigengewicht anderer Funktionsteile berücksichtigt werden müssen. Aus diesem Grunde wird das Trägerelement bevorzugt aus einem Leichtmetall, beispielsweise als Aluminium-Strangpreßprofil, ausgeführt. Ein auf diese Weise hergestelltes Hohlprofil mit geschlossenem Querschnitt kann gleichzeitig auch als Luft- oder Flüssigkeitsführungsrohr genutzt werden.

Vorteilhalte Ausgestaltungen der Erfindung werden nun im einzelnen an Hand der Zeichnung näher erläutert. Es zeigt jeweils in schematischer Darstellung
- Figur 1:: in einer perspektivischen Ansicht die grundsätzliche Einbausituation eines innerhalb eines Fahrgastraumes verlaufenden und von einer Spritzwand entkoppelten Trägerelementes,
- Figur 2:: eine Ansicht gemäß der Schnittebene X in Figur 1,
- Figur 3:: eine Draufsicht auf das in Figur 1 dargestellte Trägerelement,
- Figur 4:: ein gemäß Figur 1 ausgeführtes Trägerelement mit einer besonderen Anlenkung an Säulenteilen eines Fahrzeuges,
- Figur 5:: eine Modifikation des in Figur 2 dargestellten Ausführungsbeispiels,
- Figur 6:: eine weitere Ausgestaltung der Erfindung in einer mit Figur 2 vergleichbaren Ansicht,
- Figur 7:: eine zur Figur 6 gehörende Draufsicht,
- Figur 8:: in einer mit Figur 2 vergleichbaren Ansicht die Anordnung eines Hauptbremszylinders innerhalb des Fahrgastinnenraumes,
- Figur 9:: eine Ausführungsform, bei der die Pedalverschwenkung aus einer crashbedingten Spritzwandverschiebung gewonnen wird,
- Figur 10:: in einer mit Figur 2 vergleichbaren Ansicht einen um eine vertikale Achse schwenkbaren Bremskraftverstärker der bei crashbedingter Verschiebung eine Pedalverschwenkung einleitet,
- Figur 11:: eine Draufsicht auf die Anordnung gemäß Figur 9,
- Figur 12:: in einer mit Figur 2 vergleichbaren Ansicht ein Pedalwerk, bei dem ein Hauptbremszylinder durch einen Zugstab betätigbar ist,
- Figur 13:: eine Modifikation der Anordnung gemäß Figur 12,
- Figur 14:: ein Pedalwerk mit einem den Fußhebeln zugeordneten Stellantrieb, der eine Pedalverschwenkung unabhängig von der Spritzwandintrusion ermöglicht und
- Figur 15:: eine Modifikation des in Figur 13 dargestellten Ausführungsbeispiels.

Gleiche Bauteile weisen in allen Figuren die gleiche Bezifferung auf.

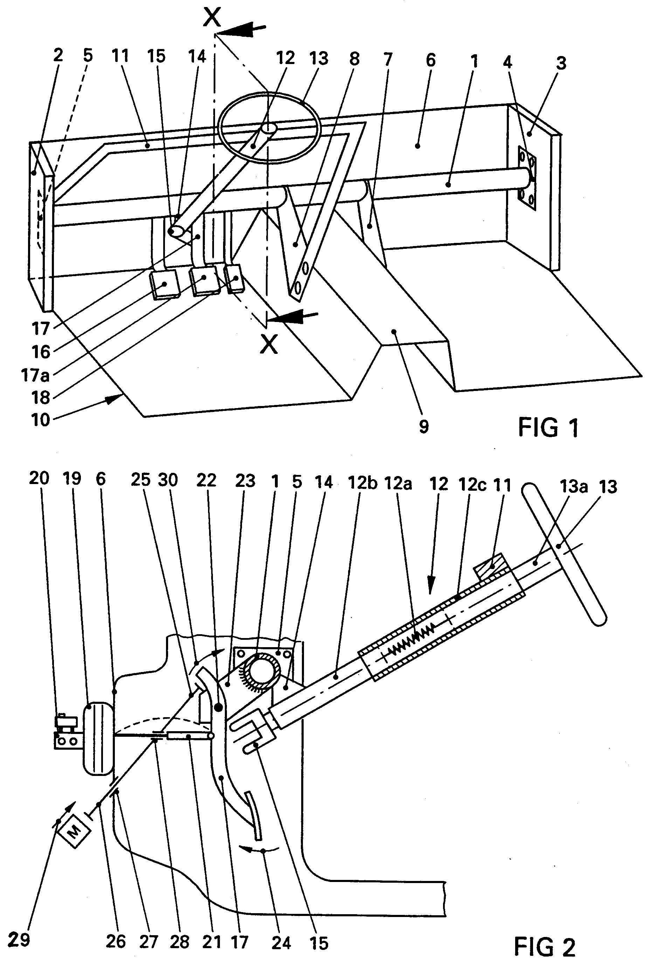

Man erkennt in Figur 1 einen nicht weiter bezifferten Ausschnitt aus einem Vorderwagenbereich eines hier nicht weiter dargestellten Fahrzeuges. Als erfindungswesentliches Bauteil ist hier ein rohrförmiges Trägerelement 1 dargestellt, das sich unterhalb eines nicht bezifferten Wasserkastens zwischen einer linken A-Säule 2 und einer rechten A-Säule 3 erstreckt und an diesen über Endflansche 4 und 5 mittels Schraub- oder Steckverbindungen gehalten ist. Die A-Säulen 2, 3 sind typischerweise im modernen Kraftfahrzeugbau Elemente des Fahrzeugaufbaus, die nach einer Kollision sowohl ihre relative Lage zueinander als auch ihre Lage zu anderen nicht von der Kollision betroffenen Karosserieabschnitten kaum verändern. Das Trägerelement 1 ist von einer den Fahrgastraum begrenzenden Spritzwand 6 so weit nach innen abgesetzt, daß bei starken Frontalkollisionen vorzugsweise kein berührender Kontakt zwischen diesen Bauteilen erzeugt wird oder aber die Intrusion der Spritzwand 6 durch das Trägerelement 1 endgültig gestoppt wird. Über Stützwangen 7 und 8 wird der Mittelbereich des Trägerelementes 1 auf einem Mitteltunnel 9 abgestützt der Bestandteil eines insgesamt mit 10 bezeichneten Bodenbleches ist. Die der Fahrerseite zugewandte Stützwange 8 dient darüber hinaus der Befestigung eines Lenkrahmengestells 11, an dem hier in nicht näher ausgeführter Weise eine Lenksäule 12 gehalten ist, deren oberes Ende von einem Lenkrad 13 abgedeckt wird und deren unteres Ende über ein unteres Lenksäulenlager 14 an das Trägerelement 1 angekoppelt ist. Alternativ zur Anbindung der Lenksäule 12 am Lenkrahmengestell 11 ist auch eine Lagerung des oberen Endes direkt an einem hier nicht weiter dargestellten und die Spritzwand 6 nach oben begrenzenden Wasserkasten möglich. Dieser wird in seiner Dimensionierung so auf Crashbeanspruchungen ausgelegt, daß der obere Anlenkpunkt nahezu ortsfest bleibt. Mittels eines nur schematisch angedeuteten Gelenkkopfes 15 erfolgt die Übertragung der am Lenkrad 13 eingebrachten Lenkbewegung auf ein hier nicht weiter dargestelltes und den Rädern des Fahrzeugs zugeordnetes Lenkgetriebe. Durch die Anbindung der Lenksäule 12 an das ortsfeste Trägerelement 1 über das Lenksäulenlager 14 ist die Lenkungsbewegung unabhängig von der Spritzwandintrusion. Die Lenkungsbewegung wird auf diese Weise auch zur Bereitstellung für eine Insassenrückhaltefunktion nutzbar.

Gemäß einer besonders vorteilhaften Weiterbildung der Erfindung ist die Lagerung am Lenkrahmengestell 11 mit einer gezielt vorgegebenen Nachgiebigkeit ausgeführt, damit im Crashfall eine definierte Lenksäulenbewegung erzielt werden kann. Weil bei einem Frontalaufprall die Hauptbelastungen aus dem der Spritzwand 6 vorgelagerten Motorraum vom erfindungsgemäß angeordneten Trägerelement 1 aufgenommen werden, ist gegenüber einer konventionellen Lagerung des oberen Lenksäulenendes eine verminderte Stützwirkung ausreichend. Durch entsprechende Abstimmung mit dem Verformungsverhalten des Wasserkastens kann auf diese Weise nach einer unfallbedingten Beaufschlagung des Lenkrades 13 die Kinematik des oberen Anlenkpunktes der Lenksäule 14 gezielt beeinflußt werden, und zwar insbesondere dann, wenn über eine weitgehend deformationssteife Strebe eine Ankopplung des Anlenkpunktes an einem ortsfesten Karosserieteil - beispielsweise an dem Mitteltunnel - erfolgt. Bevorzugt ist die unfallbedingte Bewegungsbahn des Anlenkpunktes so konzipiert, daß der zwischen Lenksäulenachse und Bodenblech 10 eingeschlossene Winkel dem Betrag nach verringert wird, um so einen im Lenkrad 13 eingebauten Airbag (hier nicht dargestellt) gegenüber dem Fahrzeuginsassen in eine verbesserte Rückhalteposition zu bewegen. Das Lenkrad 13 wird also definiert nach unten bewegt.

Wesentliche Bestandteile des dem Trägerelement 1 zugeordneten Pedalwerks sind hier ein Kupplungspedal 16, ein Bremspedal 17 mit einer Fußtrittplatte 17a und ein Gaspedal 18.

Über den in Figur 1 dargestellten Umfang hinaus ist in Figur 2 die Lenksäule 12 teleskopierend ausgeführt, und zwar mit einem integrierten Kraftbegrenzer 12a zwischen einem unteren Lenksäulenteil 12b und einem oberen Lenksäulenteil 12c. In letzterem ist ein Lenkradschaft 13a angeordnet, der an seinem oberen Ende das energieverzehrend nachgiebige Lenkrad 13 aufnimmt und an seinem unteren Ende vor den Kraftbegrenzer 12a gegenüber dem unteren Lenksäulenteil 12b abgestützt wird. Bei Beaufschlagung des Lenkrads 13 durch einen unfallbedingten Aufprall des Insassen wird die auf den Insassen einwirkende Aufprallkraft auf das Trägerelement 1 übertragen und mit Hilfe des Kraftbegrenzers 12a energieverzehrend auf ein zulässiges Höchstmaß beschränkt. Außerdem ist Figur 2 noch ein Bremskraftverstärker 19 zu sehen, der zusammen mit einem ihm zugeordneten Hauptbremszylinder 20 außerhalb der Fahrgastzelle im Aggregateraum des Fahrzeugs an der Spritzwand 6 befestigt und über eine Druckstange 21 von dem Bremspedal 17 beaufschlagbar ist. Letzteres ist über einen Anlenkpunkt 22 an einem Lagerbock 23 angelenkt, der seinerseits mit dem Trägerelement 1 starr verbunden ist. Im Falle einer Betätigung des Bremspedals 17 gemäß dem Pfeil 24 erfolgt eine Verschwenkung des Bremspedals 17 um den Anlenkpunkt 22. Ein oberes Ende 25 einer nachfolgend noch näher beschriebenen Betätigungsstange 26 wirkt als Pedalanschlag, wenn das Bremspedal wieder federbetätigt in Ruhestellung gehalten wird.

Die Betätigungsstange 26 ist nun so ausgeführt, daß sie über eine Sollbruchstelle 27, vorzugsweise im Bereich der Spritzwand 6, zunächst ortsfest in Bezug auf das Trägerelement 1 angeordnet ist. Die Stärke der Sollbruchstelle 27 ist dabei so bemessen, daß die Funktion des Pedalanschlags 25 im normalen Fahrbetrieb stets gewährleistet ist. Zur Betätigungsstange 26 gehört auch eine Schiebeführung 28, die von der dem Bremskraftverstärker 19 zugeordneten Druckstange 21 durchdrungen wird. In Bezug auf eine bei einem Frontalcrash relativ zum Fahrzeugaufbau verschiebbare Masse M (beispielsweise ein Getriebegehäuse oder ein Motorblock) ist die als Übertragungselement wirksame Betätigungsstange 26 so orientiert, daß mit der Verschiebung der Masse M gemäß Pfeil 29 eine VerSchwenkung des Bremspedals 17 über den Pedalanschlag 25 um den Anlenkpunkt 22 gemäß Pfeil 30 erfolgt. Zusätzlich sorgt auch die Verbiegung der Druckstange 21 in die mit Strichlinien gezeigte Position für eine Drehung des Bremspedals 17. Vorteilhafterweise ist die Länge der Betätigungsstange 26 so bemessen, daß nach dem in der Zeichnung angedeuteten Ausknicken der Bremsdruckstange 21 das Bremspedal 17 nicht mehr am Pedalanschlag 25 anliegt. Die Zwangsführung des Bremspedals 17 wird auf diese Weise aufgehoben, so daß ein ggf. zwischen Spritzwand 6 und Bremspedal 17 eingeklemmter Fuß nicht gequetscht wird.

Aus dem vorstehend Beschriebenen wird also deutlich, daß bei dem in Figur 2 dargestellten Ausführungsbeispiels durch die Entkopplung von Trägerelement 1 und Spritzwand 6 einerseits und durch die zusätzlich eingebrachte Verschwenkung der Pedalerie vom Fahrzeuginsassen weg andererseits ein mehrfaches Maß an Sicherheit gegen Fußverletzungen eingebracht worden ist.

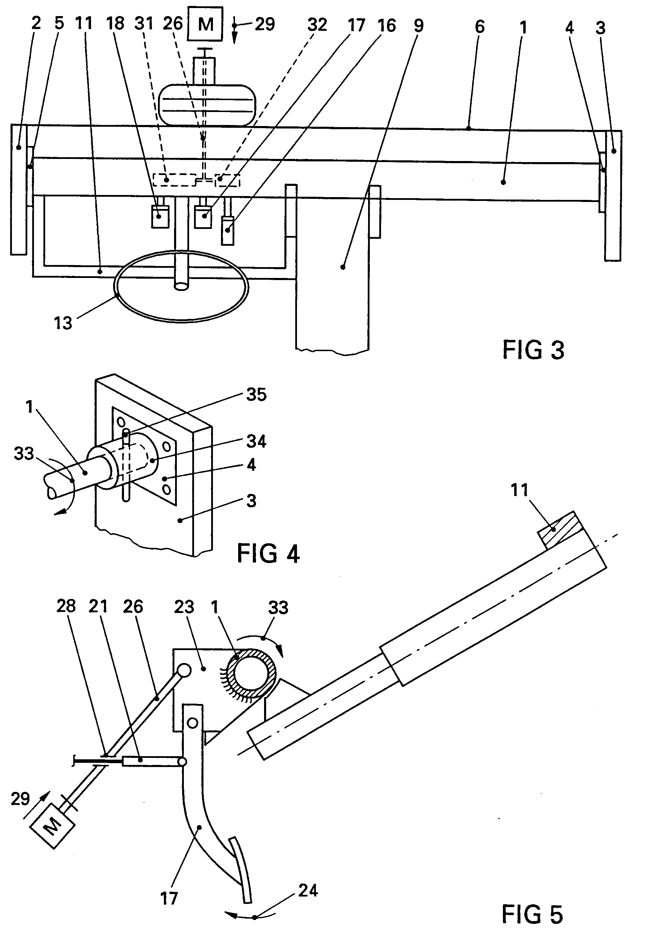

Zur näheren Verdeutlichung der in Figur 2 dargestellten Zusammenhänge zeigt die Draufsicht in Figur 3 die grundsätzliche Wirkungsweise der Betätigungsstange 26 im Zusammenhang mit der Masse M und dem Bremspedal 17. Außerdem erkennbar sind noch Mitnahmezapfen 31, 32, durch die neben dem Bremspedal 17 auch das Kupplungspedal 18 und das Gaspedal 16 aus dem Gefahrenbereich in Richtung Spritzwand 6 bei einem Frontalcrash bewegbar sind.

Bei dem in der Figur 2 dargestellten Ausführungsbeispiel wird durch die teleskopierend ausgeführte Lenksäule 12 bewirkt, daß bei einer Verschiebung des Lenkgetriebes in Richtung Fahrgastzelle der an dem Rahmengestell 11 befestigte obere Teil der Lenksäule 12 nicht weiter belastet wird. Die Lage des Lenkrades 13 relativ zum Fahrzeuginsassen bleibt damit erhalten.

Die Abstützung des Trägerelementes 1 über die Stützwangen 7 und 8 sorgt dafür daß bei einem Seitenaufprall das Trägerelement 1 nicht ausknicken kann. Durch diese Maßnahme wird die Festigkeit der gesamten Fahrzeugkarosse gegenüber Seitenaufprallkräften erheblich verbessert. Gleichzeitig ermöglicht die Erfindung so die Umsetzung eines Sicherheitskonzeptes, wie es aus der DE-A-39 28 869 bekannt ist. Je nach den Einbauverhältnissen kann auf separate Stützwangen 7, 8 gegebenenfalls verzichtet werden, um dann beispielsweise das Trägerelement 1 direkt am Mitteltunnel anzulenken. Eine weitere Variante kann darin bestehen, daß der Mitteltunnel 9 zum spritzwandseitigen Ende hin erhöht ist und das Trägerelement 1 mit direkter Anbindung an den Mitteltunnel 9 zweiteilig ausgeführt ist. In einer vereinfachten Ausführungsform kann gegebenenfalls auf die dem Beifahrer zugeordnete Hälfte verzichtet werden. Dies könnte insbesondere dann der Fall sein, wenn anderweitige Maßnahmen getroffen worden sind, um die in der DE-A-39 28 869 beschriebene Sicherheitskonzeption zu verwirklichen.

Auch bei der in den Figuren 4 und 5 dargestellten Variante wird durch eine crashbedingte Relativbewegung der Masse M gegenüber der Fahrzeugkarosse gemäß Pfeilrichtung 29 eine Verschwenkung des Pedals 17 in Richtung des Pfeiles 24 erzeugt. Ergänzend oder alternativ zu dem in Figur 2 ausgeführten Ausführungsbeispiel erfolgt hier allerdings eine Beaufschlagung des Lagerbockes 23 durch die Betätigungsstange 26. Um eine Verdrehung des Trägerelementes 1 gemäß Pfeil 33 zu ermöglichen, sind die Lagerungen des Trägerelementes 1 an den beiden A-Säulen 2 und 3 nach Überschreitung einer vorgegebenen Kraft drehbar. Am Beispiel der A-Säule 3 wird diese drehbare Anlenkung mit Hilfe der Figur 4 nun näher beschrieben. Zum Befestigungsflansch 4 gehört hier eine Aufnahmehülse 34, in die das freie Ende des Trägerelementes 1 eingesetzt ist. Die Verdrehsicherung zwischen Trägerelement 1 und Aufnahmehülse 34 erfolgt über einen Scherbolzen 35, der genau dann bricht, wenn beispielsweise bei einem Frontalaufprall die von der Masse M auf die Betätigungsstange 26 ausgeübte Kraft einen vorgegebenen Betrag überschreitet. Unter Berücksichtigung des elastischen Torsionsverhaltens des Trägerelementes 1 wird die Festigkeit des Scherbolzens 35 so bemessen, daß für gravierende Frontalaufprälle stets eine Verdrehung des Trägerelementes 1 gemäß Pfeilrichtung 33 möglich ist. An dieser Stelle wird darauf hingewiesen, daß anstelle von Scherbolzen auch Scherverzahnungen oder Reibschlußkupplungen möglich sind. Ebenso denkbar ist auch die gezielte Einbringung von Sollbruchstellen nach Art von Querschnittsschwächungen bei einer formschlüssigen Verbindung zwischen Trägerelement 1 und Aufnahmehülse 34. In gleicher Weise können auch die Verbindungen zwischen dem Trägerelement 1 und den Stützwangen 7, 8 ausgeführt sein. Der Lagerbock 23 kann mittels einer scherstiftgesicherten Drehlagerung auf dem Trägerelement 1 befestigt sein, um den Umfang der zu verdrehenden Massen bei einer Pedalverschwenkung so gering wie möglich zu halten.

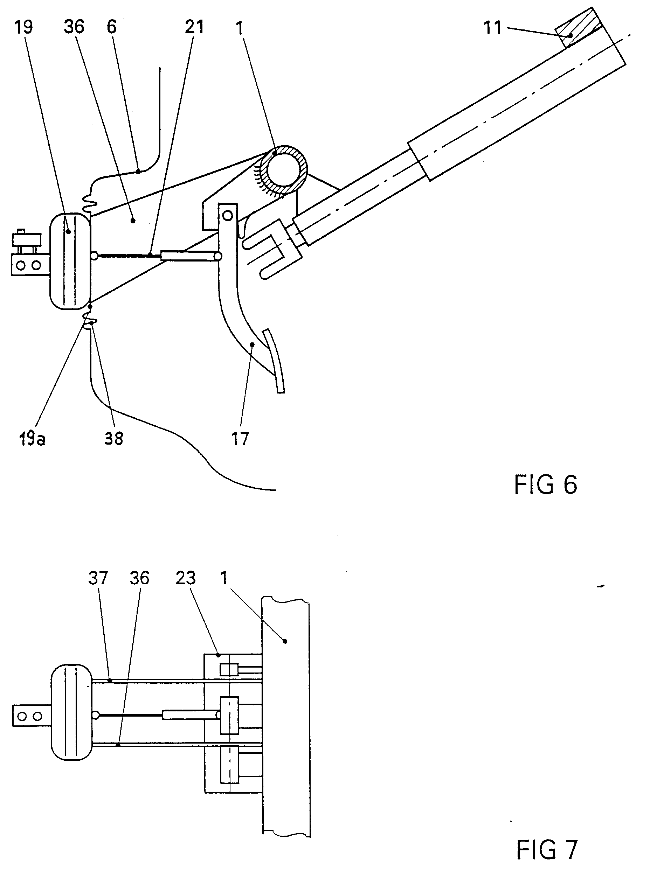

Bei dem in den Figuren 6 und 7 dargestellten Ausführungsbeispiel ist der Bremskraftverstärker 19 von der Spritzwand entkoppelt. Im Falle einer crashbedingten Intrusion der Spritzwand 6 verharrt der an dem Trägerelement 1 über Stützrippen 36, 37 und eine Betätigungsteller 19a (siehe Figur 7) gehaltene Bremskraftverstärker 19 in der in der Zeichnung dargestellten Position, weil die Spritzwand 6 aufgrund einer elastischen Verbindung mit dem Befestigungsteller 19a über eine umlaufende Membran 38 zum Bremskraftverstärker 19 Relativbewegungen ausführen kann. Von der Druckstange 21 werden damit dem Bremspedal 17 keine Verschiebebewegungen aufgezwungen. Auch die relative Lage des Lagerbockes 23 zu den Stützrippen 36 und 37 einerseits und zum Querträger 1 andererseits bleibt unverändert. Die Intrusion der Spritzwand 6 ist somit vom Pedalwerk völlig abgekoppelt und kann demzufolge auch nicht zu einer gefährlichen Verlagerung der Pedale 16 bis 18 in Richtung Fahrzeuginsassen führen.

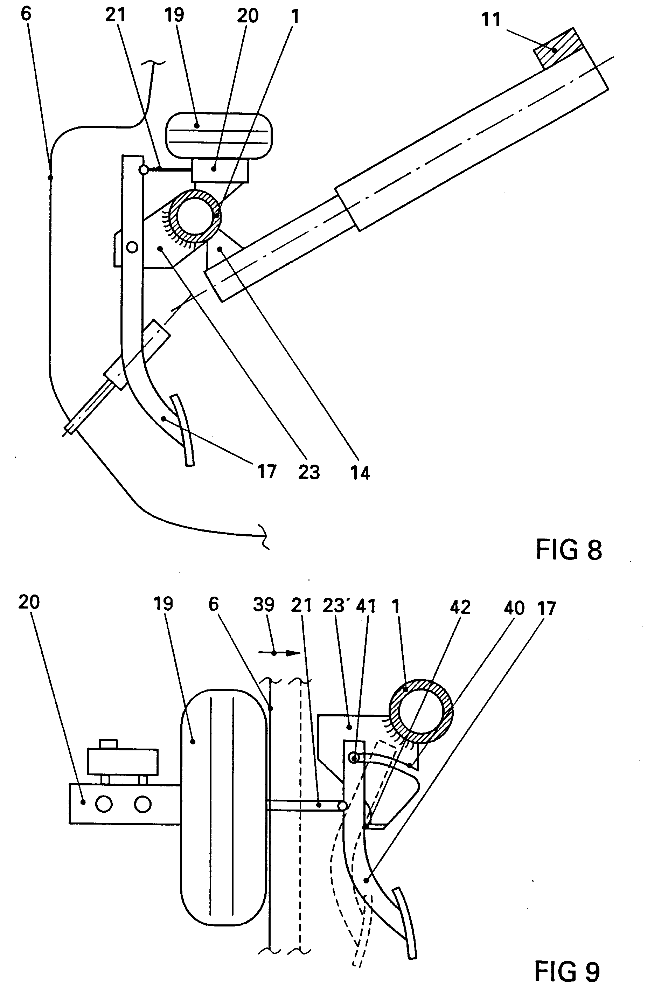

Ähnlich ist das Funktionsprinzip bei dem in Figur 8 dargestellten Ausführungsbeispiel. Dort ist der Bremskraftverstärker 19 samt Hauptbremszylinder 20 ebenfalls vollständig von der Spritzwand entkoppelt. Die Befestigung dieser beiden Bauteile erfolgt jedoch direkt am Trägerelement 1, und zwar hier beispielsweise oberhalb des unteren Lenksäulenlagers 14. Das am Lagerbock 23 angelenkte Bremspedal 17 überträgt die Betätigungsbewegungen also nicht direkt in den Aggregateraum, sondern beaufschlagt zunächst die innerhalb der Fahrgastzelle angeordneten Bauelemente der Bremseinrichtung (Hauptbremszylinder 20, Druckstange 21, Bremskraftverstärker 19). Die Anbindung an das Bremssystem des Fahrzeugs erfolgt von dort aus über an sich bekannte Leitungssysteme durch die Spritzwand 6 hindurch. Die Integration von Bremskraftverstärker 19 und Hauptbremszylinder 20 erfolgt zweckmäßigerweise innerhalb der Kontur einer Instrumententafel, so daß rein optisch von dem Fahrzeuginsassen die erfindungsgemäße Konfiguration nicht bemerkt wird.

Hervorzuheben ist für das Figur 8 dargestellte Ausführungsbeispiel, daß dieses sehr montagefreundlich gestaltet werden kann, und zwar insbesondere dann, wenn das Trägerelement 1 und die dem Pedalwerk und der Bremsanlage zugeordneten Funktionselemente zu einem Vormontagesatz zusammengefaßt sind. Darüber hinaus ist das in Figur 8 gezeigte Konzept ohne Einschränkungen in gleicher Weise so wohl bei Rechtslenker-als auch bei Linkslenkerfahrzeugen verwendbar. Außerdem wird Bauplatz im Motorraum eingespart, so daß dieses Konzept insbesondere für die Neuentwicklung von Kompaktfahrzeugen interessant ist. Die Entfernung des Hauptbremszylinders 20 und auch des Bremskraftverstärkers 19 von der Spritzwand 6 ist auch unter akustischen Gesichtspunkten sehr vorteilhaft.

Das Ausführungsbeispiel in Figur 9 zeigt, auf welcher Weise eine unfallbedingte Intrusion der Spritzwand 6 in Richtung des Pfeiles 39 in eine Schwenkbewegung des Bremspedals 17 umgesetzt werden kann. Zu diesem Zweck ist an dem ortsfest montierten Trägerelement 1 ein Lagerbock 23' angeordnet, in den hier eine Kulissenführung 40 eingelassen ist. Die lichte Weite dieser Kulissenführung 40 ist ihrem Betrage nach geringfügig kleiner als der Durchmesser eines Anlenkzapfens 41, an dem das Bremspedal 17 aufgehängt ist. Im normalen Fahrbetrieb ist das Bremspedal 17 um den Anlenkzapfen 41 verschwenkbar und ermöglicht so eine Verschiebung der Druckstange 21 entgegen der Pfeilrichtung 39. Durch hier nicht weiter dargestellte Rückzugsfedern wird bei nicht betätigtem Hauptbremszylinder 20 das Bremspedal 17 selbsttätig gegen einen Pedalanschlag 42 bewegt, der ein fester Bestandteil des Lagerbockes 23 und somit ebenfalls ortsfest in Bezug zum Trägerelement 1 ist. Eine mit der Intrusion der Spritzwand 6 in die gestrichelte Position einhergehende Verlagerung des Bremskraftverstärkers 19 sorgt dafür, daß oberhalb des Pedalanschlages 42 auch in das Bremspedal 17 ein Kippmoment eingebracht wird. Dieses wirkt auf den Anlenkzapfen 41 in dem Sinne, daß die Kulissenführung 40 ausgeweitet wird und somit eine Verdrehung des Bremspedals 17 um den Pedalanschlag 42 auch bei Belastung möglich wird. Zur eindeutigen Festlegung des Pedalanschlages 42 kann dabei gegebenenfalls das offene Ende der Kulissenführung 40 geschlossen sein. Die Länge der Kulissenführung 40 ist auf jeden Fall so bemessen, daß eine maximale Verschwenkbarkeit des Bremspedals 17 um den Pedalanschlag 42 möglich ist. Ergänzend oder alternativ zu dem in Figur 9 dargestellten Ausführungsbeispiel ist anstelle einer Kulissenführung auch der Einsatz eines elastischen Gliedes denkbar, dessen Deformationswiederstand so bemessen ist, daß bei normalen Fahrbetrieb eine eindeutige Fixierung des Anlenkzapfen 41 gewährleistet ist, und daß bei einem crashbedingten Eindringen der Spritzwand 6 und damit auch der Druckstange 21 eine Verschwenkung um den Pedalanschlag 42 möglich ist. Als Alternative kann auch eine Sollbruchstelle im Anlenkzapfen 41 vorgesehen werden, die bei Überschreitung einer bestimmten von der Druckstelle 21 ausgeübten Kraft nachgibt und damit eine Verschwenkung um den Pedalanschlag 42 nicht mehr behindert.

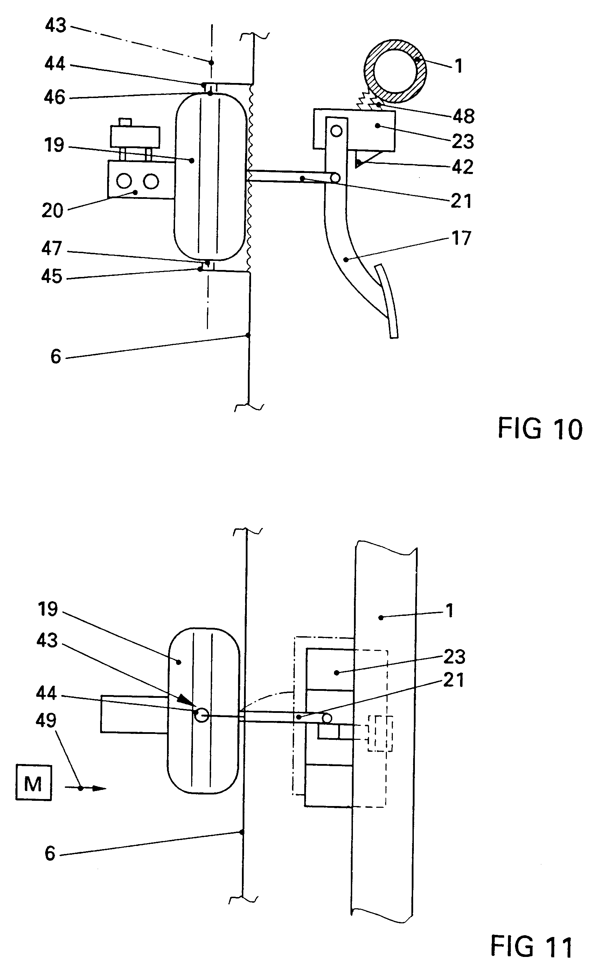

Eine weitere Möglichkeit zur crashbedingten Verstellung von Fußhebeln zeigen die Figuren 10 und 11. Von besonderer Bedeutung in dieser Anordnung ist die crashbedingte Verdrehbarkeit des Bremskraftverstärkers 19 samt Hauptbremszylinder 20 um eine in wesentlichen vertikale Achse 43, die hier durch eine strichpunktierte Linie angedeutet ist. An der Spritzwand 6 sind zur Gewährieistung dieser vertikalen Verdrehbarkeit Anlenkpunkte 44 und 45 vorgesehen, in die Gelenkzapfen 46, 47 eingreifen, die ihrerseits am Gehäuse des Bremskraftverstärkers 9, 10 gehalten sind. Über ein Scherelement 48 ist der Lagerbock 21 mit dem aufbaufesten Trägerelement 1 verbunden. In der Ruhestellung liegt das Bremspedal 17 an einem dem Lagerbock 23 zugeordneten Pedalanschlag 42 an. Darüber hinaus zeigt Figur 11 noch eine Masse M, die bei einem Frontalaufprall eine Relativbewegung zur Fahrzeugkarosserie ausführt und mit Bezug auf die vertikale Achse 43 exzentrisch zum Gehäuse des Bremskraftverstärkers 19 ausgerichtet ist. Im Falle einer Beaufschlagung des Bremskraftverstärkers 19 durch die Masse M in Richtung des Pfeiles 49 erfolgt eine Verdrehung, welche zu einer Auslenkung der Druckstange 21 in die gestrichelt angedeutete Position führt. Die dabei wirkenden Kräfte sind so groß, daß das Abscherelement 48 nachgibt und eine Verlagerung des Pedalbockes 23 in die ebenfalls gestrichelt dargestellte Position eintritt. Damit werden die Pedale sowohl seitlich als auch in Richtung Spritzwand 6 aus dem Gefahrenbereich entfernt. Unter Verzicht auf eine seitliche Verschiebung der Pedale kann auch die Drehung des Bremskraftverstärkers 19 zum Ausklinken der Bremsdruckstange 21 aus der Anlenkung am Bremspedal 17 genutzt werden. Das Bremspedal 17 wird dadurch freigängig und ist somit für den Insassen nicht mehr gefährlich.

Das in den Figuren 10 und 11 dargestellte Konzept kann auch überlagernd in Kombination mit den zuvor beschriebenen Ausführungsformen verwendet werden.

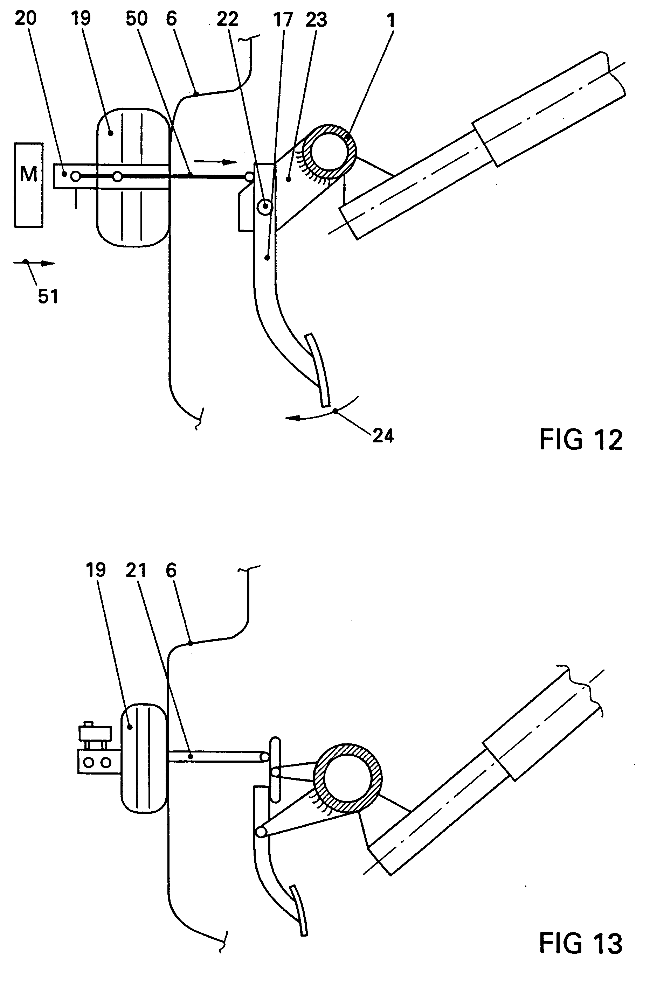

Bei dem Ausführungsbeispiel in Figur 12 wird der Hauptbremszylinder 20 von einem Zugstab 50 betätigt, der oberhalb des Anlenkpunktes 22 an dem Bremspedal 17 befestigt ist. Derartige Zugbetätigungen sind aus dem Stand der Technik grundsätzlich bekannt. Die Beaufschlagung von Bremskraftverstärker 19 und Hauptbremszylinder 20 durch die Masse M in Richtung des Pfeiles 51 führt über die so bewirkte Verschiebung des Zugstabes 50 dann allein - oder überlagert durch eine gleichzeitige Intrusion der Spritzwand 6 - zur Verschwenkung des Bremspedals 17 in Richtung Spritzwand 6 (siehe Pfeil 24). Diese Lösung ist besonders für solche Fahrzeuge interessant, bei denen beispielsweise der Zylinderkopf einer Brennkraftmaschine dicht hinter dem Bremskraftverstärker 19 angeordnet ist. Gegebenenfalls kann je nach Einbausituation statt dessen auch auf einem hier nicht dargestellten Getriebegehäuse oder Motorblock ein den Bremskraftverstärker 19 beaufschlagender Betätigungsbock vorgesehen werden. Letzterer kann vornherein mit angegossen sein oder zusätzlich aufgeschraubt werden.

Eine Anlenkung am Bremspedal 17 oberhalb des Anlenkpunktes 22 ist auch mit einer Bremsdruckstange möglich, wenn diese über einen an dem Tragerelement 1 gelagerten Kipphebel 61 (s. Figur 13) indirekt an das Bremspedal 17 gekoppelt wird.

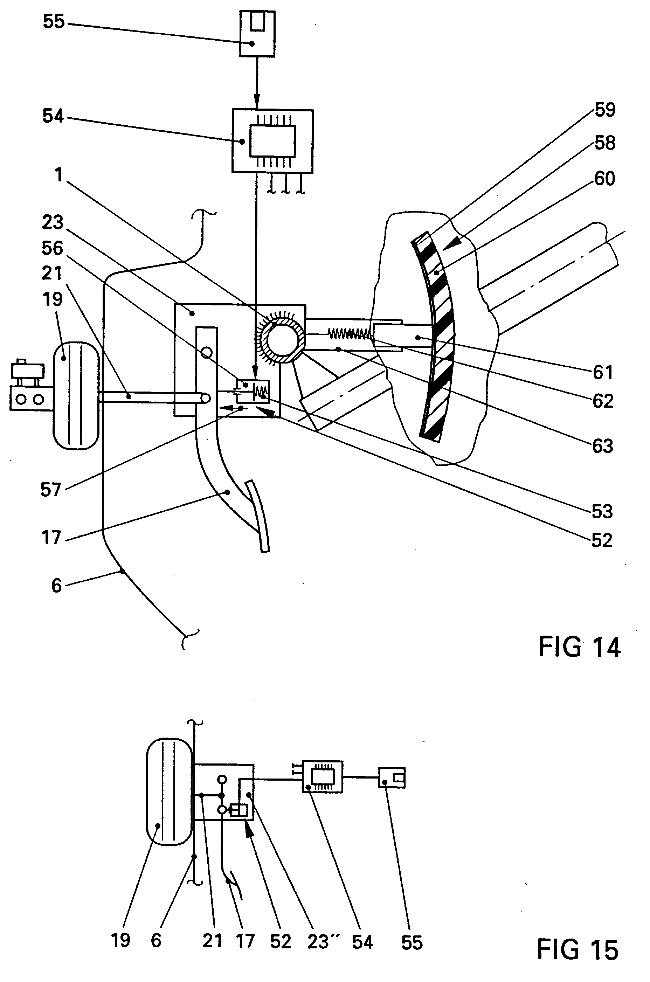

Eine Pedalverschwenkung mit extrem kurzer Ansprechzeit nach Unfallbeginn ermöglicht die in Figur 14 dargestellte Variante. Bei dieser ist dem Bremspedal 17 ein auf dem Lagerbock 23 befestigter Stellantrieb 52 zugeordnet, der hier pyrotechnisch ausgeführt ist. Eine Treibladung 53 ist von einem symbolisch dargestellten Steuergerät 54 aus zündbar, das seinerseits von wenigstens einem Crashsensor 55 beaufschlagbar ist. Hier nicht bezifferte weitere Ausgangsleitungen des Steuergerätes 54 sind beispielsweise mit diversen Airbags oder Gurtstrammereinrichtungen verbunden und bei Fahrzeugen neuer Bauart zumeist ohnehin schon vorhanden. Damit kann auf einfache Weise ein konventionelles Sicherheitskonzept um eine Komponente für den Fußschutz erweitert werden. Alternativ zu dem in Figur 14 gezeigten Ausführungsbeispiel kann der Stehantrieb auch für die Verschiebung des Lagerbockes 23 gegenüber dem Trägerelement 1 genutzt werden. Zu diesem Zweck wäre der Lagerbock 23 beispielsweise arretiert in einer in Fahrzeuglängsrichtung verlaufenden Gleitführung zu halten. Nach Aktivierung des Crashsensors 55 ist dann zunächst die Arretierung zu lösen und anschließend durch den Stellantrieb die Verschiebung auszulösen. Anstelle einer pyrotechnischen Treibladung können auch federbetätigte oder elektromotorisch bzw. hydraulisch oder pneumatisch betätigte Stellantriebe vorgesehen werden, um zur Verschwenkung des Bremspedals 17 einen Stellkolben 56 des Stellantriebs 52 in Richtung des Pfeiles 57 zu bewegen. Dies empfiehlt sich insbesondere dann, wenn im Bereich des Pedalwerks ohnehin schon Versorgungsleitungen für wenigstens eine der letztgenannten Energieformen vorliegen.

Wichtig ist in diesem Zusammenhang, daß die Verschwenkung von Fußhebeln nicht an Stellantriebe gebunden ist, die einem nahezu unverrückbaren Trägerelement zugeordnet sind. Auch bei spritzwandseitiger Befestigung an einem Lagerbock 23 (s. Figur 15) kann ein solcher Stellantrieb 52 wegen seiner kurzen Ansprechzeit schon sehr hilfreich sein, und zwar insbesondere dann, wenn durch geschickte Konstruktionsmaßnahmen die Spritzwandintrusion als solche auf ein Minimum beschränkt wird.

Als Beispiel für die vielseitige Verwendbarkeit des ortsfesten Trägerlements 1 ist in Figur 14 noch in einem Ausriß ein Kniepolster 58 mit einer Trägerplatte 59 zu sehen, die von einem Weichpolster 60 - vorzugsweise durch Beschäumung - bedeckt ist. Über ein Führungselement 61 und einen energieverzehrend nachgiebigen Kraftbegrenzer 62, die jeweils einem am Trägerelement 1 befestigten Halteglied 63 zugeordnet sind, können die Knieaufprallkräfte auf das biegesteife Trägerelement 1 und somit direkt in den Fahrzeugaufbau hinein übertragen werden. Im Unterschied zum gattungsbildenden Stand der Technik ist hier also das Trägerelement selbst nicht deformierbar, so daß unabhängig vom Knieaufprallgeschehen die Verschwenkung der Pedale kinematisch eindeutig beherrschbar ist. Es wird hier darauf hingewiesen, daß die Darstellung in Figur 14 rein schematischer Natur ist und einzelne Funktionen deshalb gesonderten Bauteilen zugeordnet sind. Zur Vereinfachung bei der tatsächlichen Realisierung können aber Integrationen vorgenommen werden. Empfehlenswert ist beispielsweise die Zusammenfassung der Funktionsteile 59 sowie 61 bis 63 zu einem Bauteil.

Das Halteglied 63 kann ergänzend oder alternativ auch für die Befestigung eines Airbagträgers hergerichtet sein. Dieser kann einen Beifahrerairbag aufnehmen oder gemäß einer besonders vorteilhalten Variante einen Fußraumairbag, der sich schützend über die Pedale legt und für eine Verlagerung der unteren Extremitäten von der Spritzwand 6 weg in Richtung Fahrzeugsitz sorgt.

Zusammenfassend kann festgehalten werden, daß mit der erfindungsgemäßen Entkopplung des biegesteifen Trägerelementes 1 von der Spritzwand 6 vielseitige Möglichkeiten gegeben werden, einen effektiven Schutz für die unteren Extremitäten eines Fahrzeuginsassen bereit zu stellen. Je nach Einbausituation können dabei bellebig viele der vorstehend beschriebenen Maßnahmen miteinander kombiniert werden.

## Patentansprüche

1. Sicherheitsanordnung für ein Kraftfahrzeug, das einen Fahrgastraum für Insassen sowie einen Fahrzeugaufbau aufweist,
- mit wenigstens einem an einem Lagerbock (23) angelenkten Fußhebel (16, 17, 18),
- mit wenigstens einem sich in etwa über wenigstens eine Hälfte der Fahrzeugbreite erstreckenden Trägerelement (1), das von einer den Fahrgastraum begrenzenden Spritzwand (6) beabstandet ist,
- wobei das Trägerelement (1), mit dem der Lagerbock (23) gekoppelt ist, biegesteif an Elementen (2, 3, 9) des Fahrzeugaufbaus derart angebunden ist, daß deren Position mit Bezug auf die vor einem Unfall vorliegende Gestalt des Fahrgastraumes nach einem Fahrzeugunfall nahezu unverändert ist,
dadurch gekennzeichnet,
daR der Lagerbock (23) mit dem Trägerelement (1) starr verbunden ist, so daß das Trägerelement und der Lagerbock sowie der daran angelenkte wenigstens eine Fußhebel (16, 17, 18) bei einer unfallbedingten Verlagerung der Spritzwand von dieser mechanisch entkoppelt sind.

2. Sicherheitsanordnung nach Anspruch 1, dadurch gekennzeichnet, daß an dem Trägerelement (1) ein Hauptbremszylinder (20) befestigt ist, der über ein Betätigungsgestänge von einem Fußhebel (17) beaufschlagbar ist.

3. Sicherheitsanordnung nach Anspruch (2), dadurch gekennzeichnet, daß an dem Trägerelement (1) ein dem Hauptbremszylinder (20) zumindest mittelbar zugeordneter Bremskraftverstärker (19) befestigt ist.

4. Sicherheitsanordnung nach Anspruch 1, dadurch gekennzeichnet, daß dem Trägerelement (1) ein Lenksäulenlager (14) für eine Lenksäule (12) zugeordnet ist.

5. Sicherheitsanordnung nach Anspruch 1, dadurch gekennzeichnet, daß das Trägerelement (1) auch an einem Mitteltunnel (9) des Kraftfahrzeugs abgestützt ist.

6. Sicherheitsanordnung nach Anspruch 1, dadurch gekennzeichnet, daß das Trägerelement (1) drehbar gelagert und durch lösbare Halteglieder in einer vorgegebenen Gebrauchsposition fixiert ist.

7. Sicherheitsanordnung nach Anspruch 6, dadurch gekennzeichnet, daß die Halteglieder durch Scherstifte gebildet sind, die nach Überschreitung einer vorgegebenen Beanspruchung abscheren.

8. Sicherheitsanordnung für ein Kraftfahrzeug, das einen Fahrgastraum für Insassen sowie einen Fahrzeugaufbau aufweist,
- mit wenigstens einem an einem Lagerbock (23) angelenkten Fußhebel (16, 17, 18), mit dem über ein Betätigungsgestänge (21) ein Hauptbremszylinder (20) betätigbar ist,
- mit wenigstens einem sich in etwa über wenigstens eine Hälfte der Fahrzeugbreite erstreckenden Trägerelement, das von einer den Fahrgastraum begrenzenden Spritzwand (6) beabstandet ist, insbesondere nach Anspruch 1,
dadurch gekennzeichnet, daß
ein Übertragungselement (26) vorgesehen ist, das mit einem Aggregat oder der Spritzwand (6) oder mit beiden wirkverbunden ist, wobei durch das Übertragungselement (26) bei einer unfallbedingten Verlagerung des Aggregates oder der Spritzwand (6) gegenüber dem Trägerelement (1) entsprechend der jeweiligen Wirkverbindung zur Verschwenkung oder Verschiebung des wenigstens einen Fußhebels (16, 17, 18) das Betätigungsgestänge (21) im Sinne einer Knickung und/oder Biegung beaufschlagbar ist.

9. Sicherheitsanordnung nach Anspruch 8, dadurch gekennzeichnet, daß der Lagerbock (23) über ein Scherelement (48) mit dem Trägerelement (1) verbunden ist und bei einer unfallbedingten Verlagerung des Aggregats durch das Übertragungselement (19) und das Betätigungsgestänge (21) gegenüber dem Trägerelement verlagerbar ist.

10. Sicherheitsanordnung nach den Ansprüchen 2 oder 8, dadurch gekennzeichnet, daß durch das Übertragungselement (26) der Fußhebel in der Weise beaufschlagbar ist, daß er mit einer Fußtrittplatte (17a) bei der unfallbedingten Relativverschiebung in Richtung Spritzwand (6) verschwenkbar ist.

11. Sicherheitsanordnung nach Anspruch 1 oder 8, dadurch gekennzeichnet, daß das Trägerelement (1) an im wesentlichen vertikal verlaufenden Säulen (2, 3) des Fahrzeugaufbaus befestigt ist.

12. Sicherheitsanordnung nach den Ansprüchen 4 und 11, dadurch gekennzeichnet, daß ein sich in etwa über die Hälfte der Fahrzeugbreite erstreckendes Trägerelement einenends an einer der Säulen (2) und anderenends an dem Mitteltunnel (9) befestigt ist.

13. Sicherheitsanordnung nach Anspruch 1, dadurch gekennzeichnet, daß ein mit dem Fußhebel (17) zusammenwirkender Bremskraftverstärker (19) auf einem Lagerbock (23) befestigt ist, der an die Spritzwand (6) heranreicht, und daß der Bremskraftverstärker (19) von der Spritzwand (6) mechanisch entkoppelt außerhalb des Fahrgastraumes angeordnet ist.

14. Sicherheitsanordnung nach Anspruch 13, dadurch gekennzeichnet, daß an dem stirnwandseitigen Ende des Lagerbockes (36, 37) ein dem Bremskraftverstärker (19) zugeordneter und in eine Ausnehmung der Stirnwand (6) hineinragender Befestigungsteller (19a) befestigt ist, der zur Ausnehmung über eine umlaufende bewegliche Membran (38) abgedichtet ist.

15. Sicherheitsanordnung nach Anspruch 1, dadurch gekennzeichnet, daß der Lagerbock (23) für die Anlenkung des Fußhebels (17) eine Lagerachse (41) aufweist, die bei Überschreitung einer vorgegebenen, unfallbedingt auf den Fußhebel (17) ausgeübten Betätigungskraft aus ihrer Ruheposition heraus um einen unteren Lagerpunkt (42) des Lagerbockes (23) verschwenkbar ist.

16. Sicherheitsanordnung nach Anspruch 15, dadurch gekennzeichnet, daß der Lagerachse (41) eine gekrümmte Kulissenführung (40) nachgeordnet ist, deren Breite geringfügig kleiner ist als der Durchmesser der Lagerachse (41).

17. Sicherheitsanordnung nach Anspruch 1, dadurch gekennzeichnet, daß einer für die Anlenkung der Fußhebel (16, 17, 18) an dem Lagerbock (23) vorgesehenen Lagerachse (41) ein Deformationselement nachgeordnet ist, das zumindest mittelbar gegen das Trägerelement (1) abstützbar ist.

18. Sicherheitsanordnung nach Anspruch 2, dadurch gekennzeichnet, daß das auf dem Hauptbremszylinder (20) einwirkende Betätigungsgestänge nach Art eines Zugstabes (50) ausgeführt und an einem oberen Ende des Fußhebels angelenkt ist.

19. Sicherheitsanordnung nach Anspruch 18, dadurch gekennzeichnet, daß bei einer Relativbewegung zwischen einem der Spritzwand (6) vorgelagerten Aggregateteil und dem Fahrgastraum der Fußhebel (17) über den Zugstab (50) und den Hauptzylinder (19) von dem Aggregateteil im Sinne einer Verschwenkung in Richtung Spritzwand (6) beaufschlagbar ist.

20. Sicherheitsanordnung nach Anspruch 1, dadurch gekennzeichnet, daß dem Lagerbock und/oder wenigstens einem der Fußhebel ein mit einer Unfallsensoreinrichtung (55) verbundener Stellantrieb (52) zugeordnet ist, durch den der Lagerbock und/oder der wenigstens eine Fußhebel in Richtung Spritzwand (6) bewegbar ist.

21. Sicherheitsanordnung nach Anspruch 4, dadurch gekennzeichnet, daß an dem dem Lenksäulenlager (14) gegenüberliegenden Ende der Lenksäule (12) ein durch den Insassen verletzungsarm beaufschlagbares Lenkrad (13) angeordnet ist, und daß die Lenksäule (12) teleskopierend auch energieverzehrend und die auf das Lenkrad (13) ausgeübte Aufprallkraft begrenzend im Bereich des unteren Lenksäulenlager (14) zumindest mittelbar an dem Träger (1) abstützbar ist.

22. Sicherheitsanordnung nach Anspruch 1, dadurch gekennzeichnet, daß an dem Trägerelement (1) energieverzehrend nachgiebige Kniepolster abgestützt sind.

23. Sicherheitsanordnung nach Anspruch 1, dadurch gekennzeichnet, daß an dem Trägerelement (1) Befestigungsmittel für eine Airbageinrichtung vorgesehen sind.

24. Sicherheitseinrichtung nach Anspruch 1, dadurch gekennzeichnet, daß das Trägerelement (1) mit geschlossenen Querschnittsprofil hohl ausgeführt ist und zumindest Teilabschnitte des Trägerelementes (1) Bestandteile eines Luft- oder Flüssigkeitsführungssystems sind.

## Claims

1. Safety arrangement for a motor vehicle which comprises a passenger compartment for passengers and a vehicle body,
- having at least one foot pedal (16, 17, 18) which is articulated to a bearing block (23),
- having at least one carrier element (1) which extends approximately over at least one half of the vehicle width and is spaced from a splash board (6) which defines the passenger compartment,
- wherein the carrier element (1), to which the bearing block (23) is coupled, is connected in a deflection-resistant manner to elements (2, 3, 9) of the vehicle body such that, with respect to shape of the passenger compartment prior to an accident, their position remains virtually unchanged after a vehicle accident,
characterised in that
the bearing block (23) is rigidly connected to the carrier element (1), so that the carrier element and the bearing block and the at least one foot pedal (16, 17, 18), which is articulated thereto, are mechanically uncoupled from the splash board when same is displaced as a result of an accident.

2. Safety arrangement according to claim 1, characterised in that a master brake cylinder (20) is attached to the carrier element (1) and can be influenced by a foot pedal (17) by way of an actuating linkage.

3. Safety arrangement according to claim 2, characterised in that a servo-brake (19), which is allocated at least indirectly to the master brake cylinder (20), is attached to the carrier element (1).

4. Safety arrangement according to claim 1, characterised in that a steering column bearing (14) for a steering column (12) is allocated to the carrier element (1).

5. Safety arrangement according to claim 1, characterised in that the carrier element (1) is also supported on a transmission tunnel (9) of the motor vehicle.

6. Safety arrangement according to claim 1, characterised in that the carrier element (1) is mounted in a rotatable manner and is fixed in a predetermined operative position by virtue of releasable holding members.

7. Safety arrangement according to claim 6, characterised in that the holding members are formed by virtue of shear pins which shear off after a predetermined level of stress has been exceeded.

8. Safety arrangement for a motor vehicle which comprises a passenger compartment for passengers and a vehicle body
- having at least one foot pedal (16, 17, 18) which is articulated to a bearing block (23), and by means of which a master brake cylinder (20) can be actuated by way of an actuating linkage (21),
- having at least one carrier element which extends approximately over at least one half of the vehicle width and is spaced from a splash board (6), which defines the passenger compartment, in particular according to claim 1,
characterised in that
a transmission element (26) is provided which is operatively connected to an aggregate or the splash board (6) or to both, wherein, in the event that an accident causes the aggregate or the splash board (6) to be displaced with respect to the carrier element (1) corresponding to the respective operative connection for the purpose of pivoting or displacing the at least one foot pedal (16, 17, 18), the actuating linkage (21) can be acted upon by virtue of the transmission element (26) so as to buckle and/or bend.

9. Safety arrangement according to claim 8, characterised in that the bearing block (23) is connected to the carrier element (1) by way of a shearing element (48) and in the event of a displacement of the aggregate caused by an accident, can be displaced with respect to the carrier element by virtue of the transmission element (19) and the actuating linkage (21).

10. Safety arrangement according to claims 2 or 8, characterised in that the foot pedal can be influenced by virtue of the transmission element (26) in such a manner that it can be pivoted by means of a foot pedal plate (17a) in the event of a relative displacement in the direction of the splash board (6) as a result of an accident.

11. Safety arrangement according to claim 1 or 8, characterised in that the carrier element (1) is attached to substantially vertically extending columns (2, 3) of the vehicle body.

12. Safety arrangement according to claims 4 and 11, characterised in that a carrier element, which extends approximately over half of the vehicle width, is attached at one end to one of the columns (2) and is attached at the other end to the transmission tunnel (9).

13. Safety arrangement according to claim 1, characterised in that a servo-brake (19) which cooperates with the foot pedal (17) is attached on a bearing block (23) which extends to the splash board (6), and that the servo-brake (19) is disposed mechanically uncoupled from the splash board (6) and outside the passenger compartment.

14. Safety arrangement according to claim 13, characterised in that to the end wall side-end of the bearing block (36, 37) there is attached an attachment plate (19a) which is allocated to the servo-brake (19) and which protrudes into a recess in the end wall (6) and which is sealed with respect to the recess by way of a circumferential, movable membrane (38).

15. Safety arrangement according to claim 1, characterised in that, for the purpose of articulating the foot pedal (17), the bearing block (23) comprises a bearing spindle (41) which can be pivoted out of its non-operative position about a lower bearing point (42) of the bearing block (23) in the event that a predetermined value for the actuating force, which is exerted upon the foot pedal (17) as a result of an accident, is exceeded.

16. Safety arrangement according to claim 15, characterised in that a curved sliding guide (40) is disposed downstream of the bearing spindle (41) and the width thereof is slightly smaller than the diameter of the bearing spindle (41).

17. Safety arrangement according to claim 1, characterised in that a bearing spindle (41), which is provided for the purpose of articulating the foot pedals (16, 17, 18) to the bearing block (23), has a deformation element disposed downstream which can be supported at least indirectly against the carrier element (1).

18. Safety arrangement according to claim 2, characterised in that the actuating linkage, which acts upon the master brake cylinder (20), is formed as a type of pull-bar (50) and is articulated to an upper end of the foot pedal.

19. Safety arrangement according to claim 18, characterised in that in the event of a relative movement between an aggregate part, which is mounted upstream of the splash board (6), and the passenger compartment, the foot pedal (17) can be influenced by way of the pull-bar (50) and the master cylinder (19) by the aggregate part in the sense of a pivotal movement in the direction of the splash board (6).

20. Safety arrangement according to claim 1, characterised in that the bearing block and/or at least one of the foot pedals is allocated an actuating drive (52) which is connected to an accident sensor device (55) and which serves to move the bearing block and/or the at least one foot pedal in the direction of the splash board (6).

21. Safety arrangement according to claim 4, characterised in that on the end, which lies opposite to the steering column bearing (14), of the steering column (12) there is disposed a steering wheel (13), which can be influenced by the passenger without causing injury, and that the steering column (12) is telescopic and dissipates energy and the collision force, which is exerted upon the steering wheel (13), can be supported at least indirectly on the carrier (1) in a limiting manner in the region of the lower steering column bearing (14).

22. Safety arrangement according to claim 1, characterised in that knee cushions, which are flexible so as to dissipate energy, are supported on the carrier element (1).

23. Safety arrangement according to claim 1, characterised in that attachment means for an airbag device are provided on the carrier element (1).

24. Safety arrangement according to claim 1, characterised in that the carrier element (1) is hollow with a closed cross-sectional profile and at least partial portions of the carrier element (1) are components of an air or fluid guiding system.

## Revendications

1. Disposition de sécurité pour un véhicule automobile qui comprend un habitacle pour les occupants ainsi qu'une carrosserie de véhicule, comportant :
- au moins un levier de pédale (16, 17, 18) articulé sur un support (23),
- au moins un élément de support (1) s'étendant à peu près sur au moins une moitié de la largeur du véhicule et placé à distance d'un tablier d'auvent (6) délimitant l'habitacle,
l'élément de support (1), auquel le support (23) est assujetti, étant relié de manière indéformable en flexion à des éléments (2, 3, 9) de la carrosserie du véhicule de manière que leur position soit à peu près inchangée après un accident du véhicule par rapport à la forme de l'habitacle existant avant un accident,
caractérisée
en ce que le support (23) est assujetti à l'élément de support (1) de manière que l'élément de support et le support ainsi qu'au moins un levier de pédale (16, 17, 18) articulé sur ce dernier soient mécaniquement dissociés du tablier d'auvent lors d'un déplacement de ce dernier qui est dû à un accident.

2. Disposition de sécurité selon la revendication 1, caractérisée en ce qu'un cylindre principal de freinage (20), qui est fixé à l'élément de support (1), peut être soumis à la force exercée par un levier de pédale (17) par l'intermédiaire d'une tringlerie de manoeuvre.

3. Disposition de sécurité selon la revendication 2, caractérisée en ce qu'un amplificateur (19) de la force de freinage qui est au moins associé indirectement au cylindre principal de freinage (20) est fixé à l'élément de support (1).

4. Disposition de sécurité selon la revendication 1, caractérisée en ce qu'un support (14) d'une colonne de direction (12) est associé à l'élément de support (1).

5. Disposition de sécurité selon la revendication 1, caractérisée en ce que l'élément de support (1) prend également appui sur un tunnel central (9) du véhicule.

6. Disposition de sécurité selon la revendication 1, caractérisée en ce que l'élément de support (1) est monté rotatif et en ce que des organes amovibles de retenue le fixent à une position prescrite d'utilisation.

7. Disposition de sécurité selon la revendication 6, caractérisée en ce que les organes de retenue sont formés de tiges de cisaillement qui effectuent un cisaillement après un dépassement d'une sollicitation prescrite.

8. Disposition de sécurité pour un véhicule automobile qui comprend un habitacle pour les occupants ainsi qu'une carrosserie de véhicule, comportant
- au moins un levier de pédale (16, 17, 18) articulé à un support (23) et au moyen duquel un cylindre principal de freinage (20) peut être actionné par l'intermédiaire d'une tringlerie d'actionnement (21),
- au moins un élément de support s'étendant à peu près sur au moins une moitié de la largeur du véhicule et placé à distance d'un tablier d'auvent (6) délimitant l'habitacle, en particulier selon la revendication 1,
caractérisée en ce que
un élément de transmission (26) qui est prévu est relié fonctionnellement à un appareil ou au tablier d'auvent (6) ou à tous les deux, l'élément de transmission (26) pouvant exercer une contrainte sur la tringlerie d'actionnement (21) dans le sens d'un flambage et/ou d'une flexion en cas de déplacement de l'appareil ou du tablier d'auvent (6), qui est dû à un accident, par rapport à l'élément de support (1) en fonction d'une liaison fonctionnelle particulière pour faire basculer ou pour déplacer au moins un levier de pédale (16, 17, 18).

9. Disposition de sécurité selon la revendication 8, caractérisée en ce que le support (23) est relié à l'élément de support (1) par un élément de cisaillement (48) et peut être déplacé par l'élément de transmission (19) ou par la tringlerie d'actionnement (21) par rapport à l'élément de support en cas d'un déplacement de l'appareil qui est dû à un accident.

10. Disposition de sécurité selon les revendications 2 ou 8, caractérisée en ce que l'élément de transmission (26) peut exercer une force sur le levier de pédale de manière que celui-ci puisse basculer vers le tablier d'auvent (6) avec une plaque (17a) d'appui au pied en cas de déplacement relatif dû à un accident.

11. Disposition de sécurité selon la revendication 1 ou 8, caractérisée en ce que l'élément de support (1) est fixé à des colonnes (2, 3) de la carrosserie du véhicule qui sont orientées sensiblement verticalement.

12. Disposition de sécurité selon les revendications 4 et 11, caractérisée en ce que l'élément de support (1) qui s'étend à peu près sur la moitié de la largeur du véhicule est fixé à une extrémité à l'une des colonnes (2) et à l'autre extrémité au tunnel central (9).

13. Disposition de sécurité selon la revendication 1, caractérisée en ce qu'un amplificateur (19) de la force de freinage qui coopère avec le levier de pédale (17) est fixé à un support (23) qui parvient à proximité du tablier d'auvent (6) et en ce que l'amplificateur (19) de la force de freinage est disposé à l'extérieur de l'habitacle en étant dissocié mécaniquement du tablier d'auvent (6).

14. Disposition de sécurité selon la revendication 13, caractérisée en ce qu'un plateau de fixation (19a), qui est associé à l'amplificateur (19) de la force de freinage et qui pénètre dans une cavité de la paroi antérieure (6), est fixé à l'extrémité du support (36, 37) située sur le côté de la paroi antérieure et est isolé vis-à-vis de la cavité au moyen d'une membrane mobile circonférentielle (38).

15. Disposition de sécurité selon la revendication 1, caractérisée en ce que le support (23) comprend un axe de montage (41) destiné à l'articulation du levier de la pédale (17) et qui peut tourner autour d'un point inférieur (42) de montage du support (23) pour sortir de sa position de repos en cas de dépassement d'une force prescrite d'actionnement exercée sur le levier de pédale (17) en raison d'un accident.

16. Disposition de sécurité selon la revendication 15, caractérisée en ce qu'un guide incurvé en glissière (40), dont la largeur est légèrement inférieure au diamètre de l'axe de montage (41), est disposé en aval de l'axe de montage (41).

17. Disposition de sécurité selon la revendication 1, caractérisée en ce qu'un axe de montage (41) prévu pour l'articulation du levier de pédale (16, 17, 18) sur le support (23) est disposé en aval d'un élément de déformation qui peut prendre appui au moins indirectement contre l'élément de support (1).

18. Disposition de sécurité selon la revendication 2, caractérisée en ce que la tringlerie d'actionnement agissant sur le cylindre principal de freinage (20) est réalisée à la manière d'une tige de traction (50) et est articulée sur une extrémité supérieure du levier de pédale.

19. Disposition de sécurité selon la revendication 18, caractérisée en ce que lors d'un déplacement relatif entre un élément d'appareil monté en amont du tablier d'auvent (6) et l'habitacle, le levier de pédale (17) peut être exposé à une contrainte dans le sens d'un basculement vers le tablier d'auvent (6) par la tige de traction (50) et le cylindre principal (19) de l'élément d'appareil.

20. Disposition de sécurité selon la revendication 1, caractérisée en ce qu'une servo-commande (52) reliée à un dispositif détecteur d'accident (55) est associée au support et/ou à au moins l'un des leviers de pédale et peut déplacer le support et/ou au moins un levier de pédale vers le tablier d'auvent (6).

21. Disposition de sécurité selon la revendication 4, caractérisée en ce qu'un volant (13) pouvant être exposé à une contrainte par l'occupant de manière à lui éviter d'être blessé est disposé à l'extrémité de la colonne de direction (12) qui est à l'opposé du support (14) de la colonne de direction et en ce que la colonne de direction (12), qui est télescopique de manière à aussi absorber l'énergie et qui limite la force de choc exercée sur le volant (13), peut prendre appui dans la région du support inférieur (14) de la colonne de direction au moins indirectement sur l'élément de support (1).

22. Disposition de sécurité selon la revendication 1, caractérisée en ce qu'un rembourrage souple pour les genoux, qui absorbe l'énergie, prend appui sur l'élément de support (1).

23. Disposition de sécurité selon la revendication 1, caractérisée en ce que des moyens de fixation destinés à un dispositif à coussin à gaz sont prévus sur l'élément de support (1).

24. Disposition de sécurité selon la revendication 1, caractérisée en ce que l'élément de support (1) est de conformation creuse avec un profil transversal fermé et au moins des portions de l'élément de support (1) font partie d'un système de circulation d'air ou de liquide.
